# EUROPEAN PATENT SPECIFICATION

(11) **EP 0 214 870 B1**
(45) Date of publication and mention of the grant of the patent: **10.02.1993**
(21) Application number: 86307013.2
(22) Date of filing: 11.09.1986
(51) Int. Cl.: G06F 12/02, G06F 12/10

(54) **System for controlling a data transfer instruction with an extension storage device**
Anordnung zur Steuerung eines Datenübertragungsbefehls für einen Erweiterungsspeicher
Système de commande d'instruction de transfert de données pour une mémoire d'extension

(30) Priority: 12.09.1985 JP 202011/85
(43) Date of publication of application: 18.03.1987
(73) Proprietor: FUJITSU LIMITED, Kawasaki-shi, Kanagawa 211 (JP)
(72) Inventor: Yoshida, Akira, Kawasaki-shi Kanagawa 213 (JP); Okamoto, Tetsuro, Machida-shi Tokyo 194 (JP)
(74) Representative: Skone James, Robert Edmund

(56) References cited:
- FR-A- 1 508 747
- FR-A- 2 438 296
- GB-A- 1 531 261
- US-A- 3 609 665

## Description

This invention relates to a system for controlling a data transfer instruction in a computer apparatus used in, for example, a super-high-speed computer apparatus for large-scale scientific and technological calculations, and a general purpose computer apparatus using an extension storage unit.

In general, in a super-high-speed computer apparatus in which a large amount of data, such as vector data, intermediate computed results and swapping, paging area are processed, the memory device is constituted by economical memories consisting of semiconductor memory elements having an operating speed far higher than that of a magnetic disk memory, although lower than that of a memory element constituting the main memory, and such a constituted memory device is used as an extension memory for relieving a shortage of capacity of the main memory.

In a prior art super-high-speed computer apparatus, access to the main memory is carried out by a vector processing unit, a channel processor, or the like, through a memory control unit. The vector processing unit consists of, for example, a vector unit and a scalar unit. Access to the main memory can be carried out independently from both the vector unit and the scalar unit.

The extension memory is connected through the memory control unit to the main memory, and data can be transferred between the extension memory and the main memory. This data transfer is carried out with a page unit of, for example, 4KBytes, under the control of an operating system executed by the scalar unit, in such a manner that the extension memory services, in the same way, a so-called ultra-high-speed direct-access storage unit for paging. Alternatively, the extension memory is used as a high-speed memory unit, replacing the direct-access storage unit for storing a large amount of input/output data used in a huge application program.

Where an asynchronous large-capacity transfer related to an operating system is carried out, when a general input/output control system is used, the overhead of the channel program and interruption program in the operation of the apparatus under the processing of an operating system is increased, and accordingly, the efficiency of the processing in the apparatus is degraded. Also, control of the operating system is needed for managing the peripheral devices which are common resources in the system, and the execution of an input/output start instruction by the operating system is also needed. This causes a further increase in the above-mentioned overhead.

Furthermore, it is very difficult to store the array data of a user program in the extension memory, since there is still a problem of an increased overhead in connection with the data transfer.

It is an object of the present invention to provide an improved system for controlling a data transfer instruction in a computer apparatus having a main storage unit and an extension storage unit, in which the overhead in the operation of the apparatus under the processing of an operating system is reduced and the efficiency of the processing in the apparatus is enhanced.

The invention is set out in Claim 1.

An embodiment of the invention will now be described, by way of example, with reference to the accompanying drawings, in which:-
Figure 1 is a block schematic diagram of a system for controlling a data transfer instruction in a computer apparatus to which the invention is to be applied;
Figure 2 is a block schematic diagram of a system for controlling a data transfer instruction in a computer apparatus according to an embodiment of the invention;
Figure 3 is a block schematic diagram of the structure of an address control portion in the system of Figure 2;
Figures 4, 5A, 5B, and 6 show three operation manners for accessing an extension memory in the system of Figure 2;
Figure 7 shows an example of a data transfer instruction used in the system of Figure 2; and
Figures 8 and 9 show another example of the instruction and a descriptor used in the system of Figure 2.

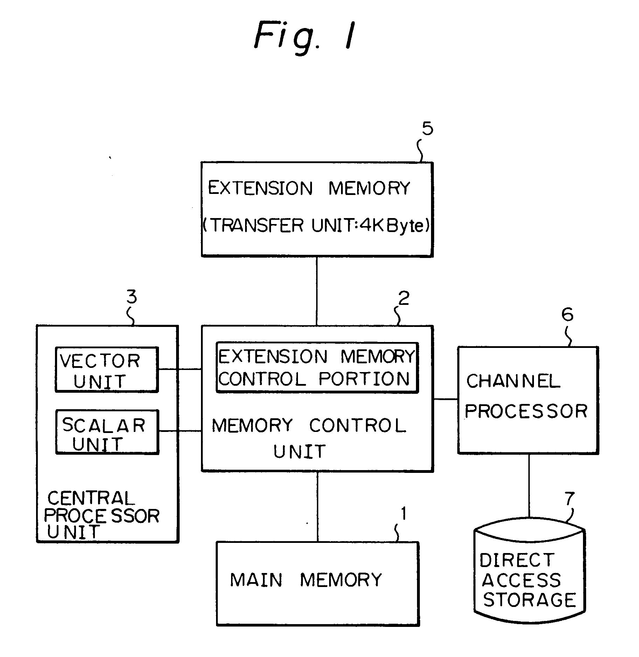

Before commencing the description of the preferred embodiments, a system for controlling a data transfer instruction in a computer apparatus to which the present invention is to be applied is described with reference to Figure 1. The system of Figure 1 includes a main memory 1, a memory control unit 2, a central processor unit 3, an extension memory 5 having an extension memory control, a channel processor 6, and a direct access storage 7.

In the system of Figure 1, the access to the main memory 1 is carried out by the central processor unit 3 and the channel processor 6, through the memory control unit 2. The central processor unit 3 consists of, for example, a vector unit and a scalar unit. The access to the main memory 1 can be carried out independently from both the vector unit and the scalar unit. The extension memory 5 is connected through the memory control unit 2 with the main memory 1, and the data can be transferred between the extension memory 5 and the main memory 1. This data transfer is carried out with a page unit of, for example, 4KBytes, under the control of an operating system executed by the scalar unit, in such a manner that the extension memory 5 serves in the same way as a so-called ultra-high-speed direct access storage unit for paging. Alternatively, the extension memory 5 is used as a high-speed memory device, replacing the direct access storage unit, for storing a large amount of input/output data, used in a huge application program.

Where an asynchronous large capacity transfer related to an operating system is carried out, when a general input/output control system is used, the overhead of the channel program and interruption program in the operation of the apparatus under the processing of an operating system is increased, and accordingly, the efficiency of the processing in the apparatus is deteriorated. Also, the control of the operating system is needed for managing the peripheral devices which are common resources in the system, and the execution of an input/output start instruction by the operating system is also needed. These situations cause a further increase in the above-mentioned overhead. Also, it is very difficult to store the array data of a user program in the extension memory 5, since there is still a problem of an increase of the overhead in connection with the data transfer.

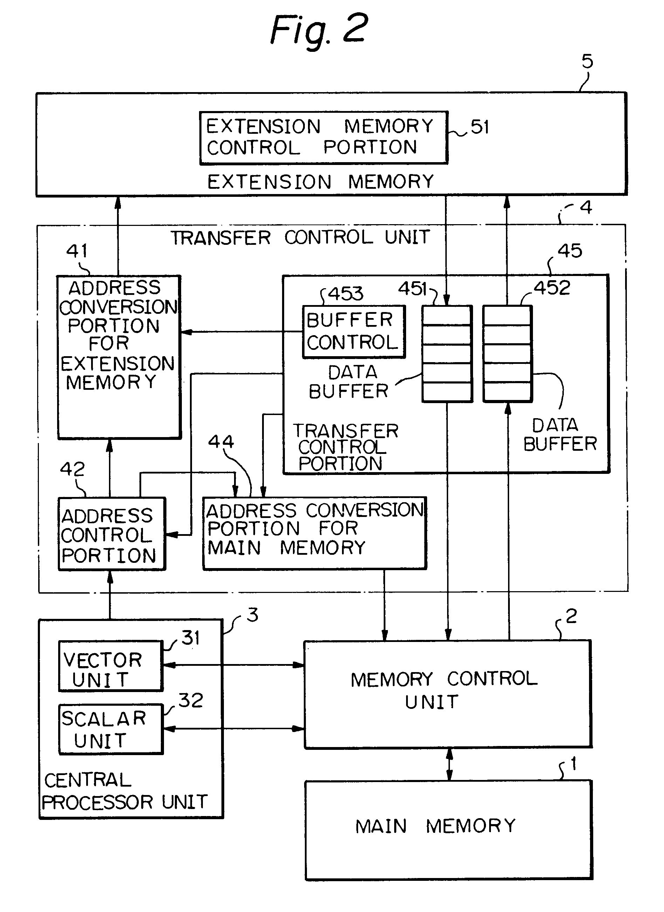

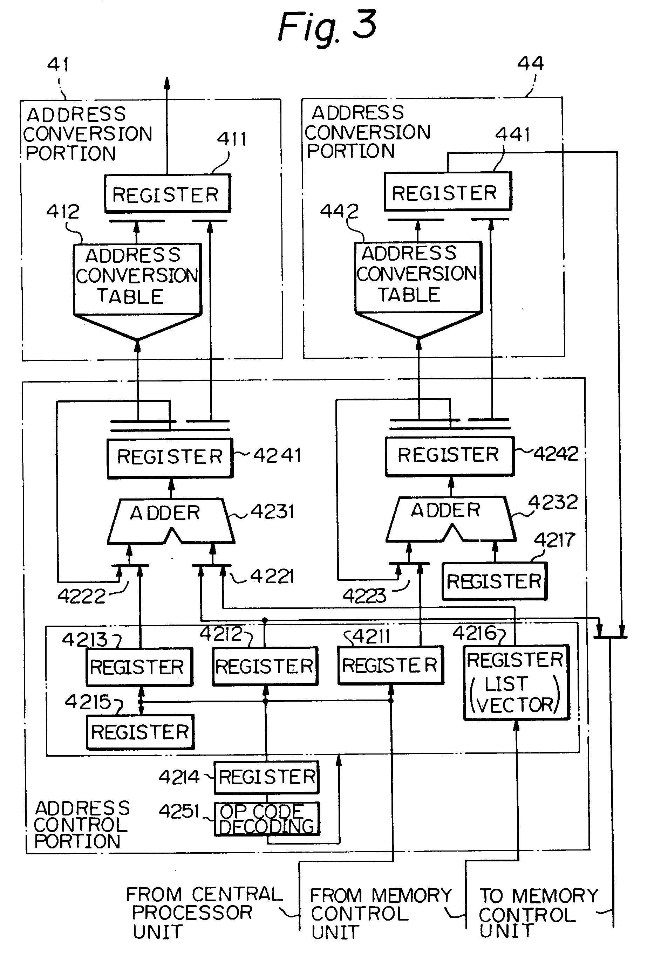

A system for controlling a data transfer instruction in a computer apparatus according to an embodiment of the present invention is shown in Fig. 2. The structure of the address control portion in the system of Fig. 2 is shown in Fig. 3. The system of Fig. 2 includes a main memory 1, a memory control unit 2, a central processor unit 3, a transfer control unit 4, and an extension memory 5. The central processor unit 3 may include a vector unit 31 and a scalar unit 32. The transfer control unit 4 includes an address conversion portion 41 for the extension memory, an address control portion 42, an address conversion portion 44 for the main memory, and a transfer control portion 45 having data buffers shift registers or registerfiles 451 and 452, and a buffer control portion 453. The extension memory 5 includes a data transfer control and an extension memory bank control portion 51.

The transfer of data between the main memory 1 and the extension memory 5 is controlled by the transfer control unit 4 by the execution of instructions related to data transfer in the central processor unit 3.

The address conversion portion 41 controls address conversion and the like from a logical address to a real address of the extension memory 5. The address conversion portion 44 controls address conversions concerning the main memory 1.

Where data is transferred between the extension memory 5 and the main memory 1, the information for address conversion from a logical address to a real address of the extension memory 5 and the main memory 1 are set in the address conversion portion 41 and the address conversion portion 44, respectively, by the central processor unit 3.

When a predetermined data transfer instruction for a transfer of data is detected by the central processor unit 3, the detected data transfer instruction is transferred to the transfer control unit 4.

By the operation of the central processor unit 3, the designation of the beginning addresses of memory regions of the extension memory 5 and the main memory 1 given as operand of the instruction, a increased value of an address for the calculation of each of the elements of the vector data, the number of such elements, and the like, are set in an address register in the address control portion 42. Also, the transmission of control information concerning a transfer mode and the direction of data transfer determined by the operation code of the data transfer instruction, and the like, is carried out.

By the operation of the address control portion 42, the desired logical addresses for each of access units are generated successively in accordance with the designated address information and transfer mode, the logical address of the extension memory 5 is supplied to the address conversion portion 41, and the logical address of the main memory 1 is supplied to the address conversion portion 44.

By the operation of the address conversion portion 41 and the address conversion portion 44, the conversion from a logical address to a real address in accordance with the address conversion information set in the address conversion portion 41 and the address conversion portion 44 is carried out, the transmission of real addresses to the extension memory 5 and the main memory 1 is carried out, the request for access operation by this transmission of real addresses is carried out, and accordingly, an access to the desired vector data element is carried out.

In this access operation, the data read from the extension memory 5 is registered in the data buffer 451, and the data registered in the data buffer is then written into the main memory 1, while the data read from the main memory 1 is written into the extension memory 5 through the data buffer452.

In the system of Fig. 2, the overhead of input/output processing in the utilization of the extension memory is reduced so that the efficiency of processing of the system can be improved.

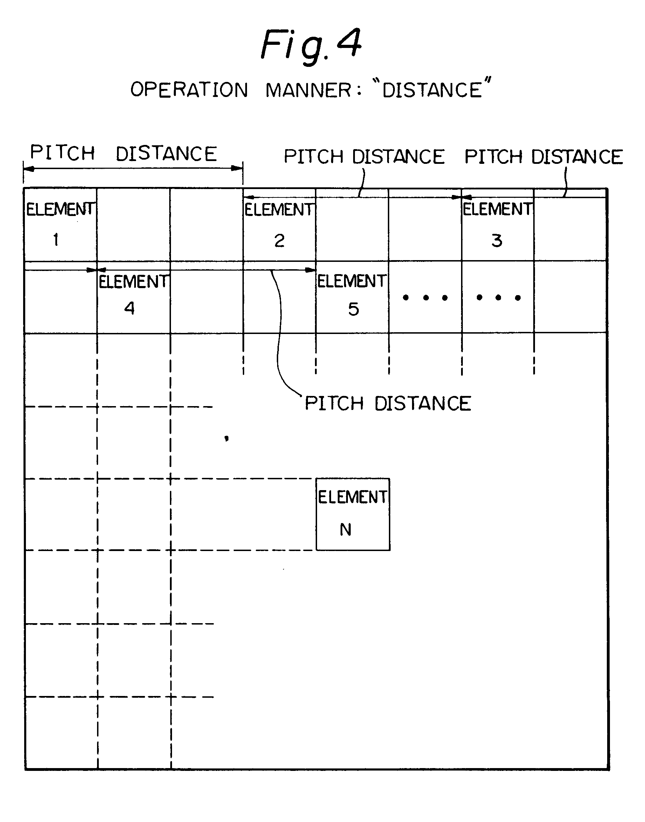

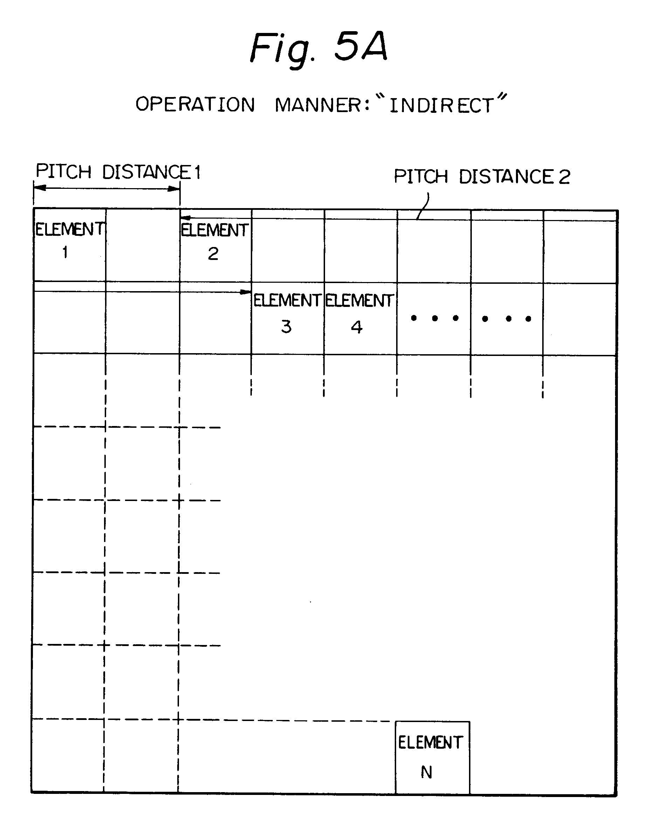

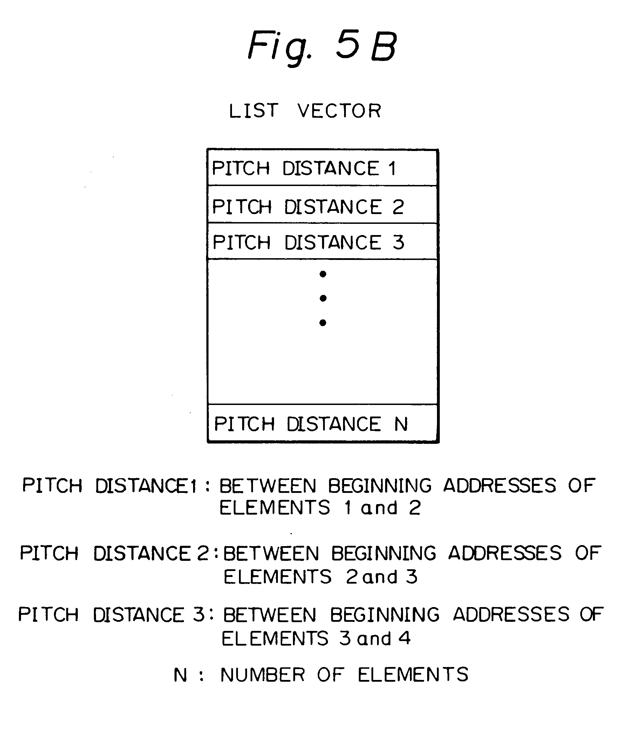

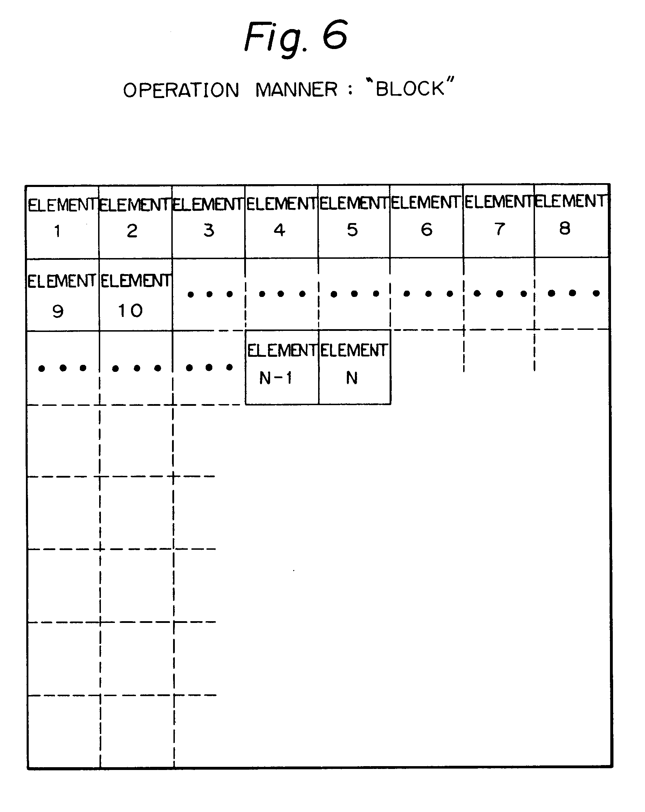

The kinds of operations concerning data transfer are illustrated in Figs. 4, 5A, 5B and 6. Figure 4 shows the "Distance" operation, Figs. 5A and 5B show the "Indirect" operation and the "List Vector", and Fig. 6 shows the "Block" operation.

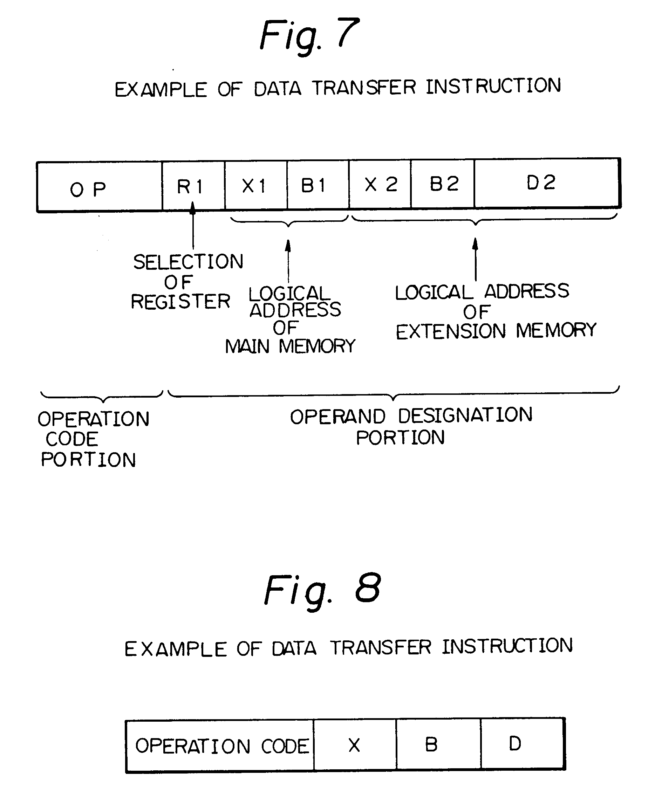

An example of the data transfer instruction is shown in Fig. 7. The instruction consists of an operation code portion and an operand designation portion. The operation code portion indicates an operation code OP concerning the main memory to the extension memory or the extension memory to the main memory transfer. The operand designation portion includes R1 for selection of the register, X1 and B1 for the logical address of the main memory, and X2, B2, and D2 for the logical address of the extension memory.

There are a number of kinds of OP. For example, a distance load instruction, a distance store instruction, a indirect designation load instruction, a indirect designation store instruction, a block load instruction, and a block store instruction.

Here, "load" represents the data transfer from the main memory to the extension memory, and "store" represents the data transfer from the extension memory to the main memory.

Three cases are explained as follows.

### (i) Distance Load and Distance Store

In the distance load and distance store operations (Fig. 4), data transfer between data elements arranged at a constant pitch distance (interval) in the extension memory 5 and data elements arranged continuously in the main memory 1 is instructed. This constant pitch distance is designated by the content of the register designated by R1 of the instruction (Fig. 7) and is used as an address increment during data transfer control. The number of data elements to be transferred is designated by the content of the register next to the register designated by R1.

### (ii) Indirect Load and Indirect Store

In the indirect load and indirect store operations (Fig. 5A), the pitch distances (intervals) of data elements in the extension memory 5 is designated by the list vector preliminarily provided in the main memory 1. The address of the memory of the list vector is designated by the content of the register designated by R1 of the instruction. The number of the data elements to be transferred is designated in the same manner as in the above-described case.

### (iii) Block Load and Block Store

In the block load and block store operations (Fig. 6), the transfer of data in continuous regions is instructed. The number of data elements to be transferred is designated by R1. For example, the number 512, which is the region of 4 K Bytes at 8 Bytes per element, is designated by "0", the number 8192, which is the region of 64 K Bytes at 8 Bytes per element, is designated by "1".

The operation of the system of Fig. 2 is as follows. When one of the above-described data transfer instructions is fetched by the central processor unit 3, the fetched instruction is transferred to the transfer control unit 4. The effective logical addresses of the first and second operands are calculated by the transfer control unit 4 under a known control, and the calculated addresses are set in a predetermined register in the address control portion 42 in the transfer control unit 4.

In cases other than a block load and block store, the contents of the register designated by R1 and the register next to the register designated by R1 are set in a predetermined register in the address control portion 42. In the case of a block load and block store, the designated number of the elements determined by the value of R1 is set in a predetermined register in the address control portion 42.

The detailed structure of the address control portion 42 will be described with reference to Fig. 3.

The logical address of the first operand (X1, B1) is set in the register 4211, the logical address of the second operand (X2, B2, D2) is set in the register 4213, the content of the register designated by R1 is set in the register 4212, and the content of the register next to the register designated by R1 is set in the register 4215.

In the case of a block load and block store, the number of sequence of elements determined by R1 is set in the register 4215.

The kind of operation concerning transfers from the main memory to extension memory or the extension memory to main memory is designated by setting the instruction code (OP code) in the register 4214.

The kind of operation is discriminated by the register 4214. Where it is discriminated as an indirect designation store, the access to the main memory 1 in accordance with the content of the register 4212 is carried out, and the designated list vector is read from the main memory 1 to the list vector register 4216. The list vector is a vector having a variable length representing pitch distances (intervals) of data elements.

Subsequently, the content of the register 4213 is set through the adder 4231 into the register 4241, and the content of the register 4241 is then transmitted to the address conversion portion 41.

In the address conversion portion 41, the data of the register 4241 is converted through the address conversion table which is preliminarily set in the address conversion table 412 into the data of the real address, and the obtained converted real address is set in the register 411. The lower bits of the data of the register 4241 may be added to the real address set in the register 411 as lower bits. Thus, a real address for the extension memory 5 is obtained in the register 411.

The address registered in the register 411 is transmitted to the extension memory control portion 51, and an access to the extension memory 5 is carried out. In the "load" operation, the data are sequentially written into the extension memory 5 with the beginning data of, for example, 8 Bytes. In the "store" operation, the data of 8 Bytes read from the extension memory 5 is registered temporarily in the end bits of the data buffer 451, and the registered data is then written into the main memory 1.

The content of the register 4241 is returned to the input of the adder 4231. The returned content is added to the content of the register 4212 or the content of one item selected sequentially from the list vector registers 4216 in accordance with a transfer mode determined by the operation code. The result of this addition is set again in the register 4241. The control similar to the above-described control is carried out using the set result of the addition as the logical address for the next element.

At the same time, the content of the register 4211 is set through the adder 4232 into the register 4242. The address in the register 4242 is converted through the address conversion table 442 in the address conversion table 442 into the data in the register 441. Thus, a real address for the main memory 1 is obtained in the register 441.

The address registered in the register 441 is transmitted to the memory control unit 2, and an access to the main memory 1 is carried out. In the "store" operation, the data of the beginning 8 Bytes of the data buffer 451 is written into the main memory 1. In the "load" operation, the data of 8 Bytes read from the main memory 1 is temporarily registered into the data buffer 452, and this registered data is then written into the extension memory 5.

The content of the register 4242 is returned to the input of the adder 4232, and the returned content is added to the value representing the pitch distance which is set in the register 4217. The result of the addition is again set in the register 4242. The control similar to the above-described control is carried out using the set result as the logical address for the next element.

The synchronization of the accesses to the extension memory 5 and to the main memory 1 is monitored and controlled by the transfer control portion 45. Under these monitoring and control processes, the address generation, the address conversion, and the access to the extension memory or to the main memory is carried out by the address control portion 42, the address conversion portion 41, and the address conversion portion 44.

The execution of the data transfer instruction is completed after a predetermined number, set in the register 4215, of the above-described control is carried out.

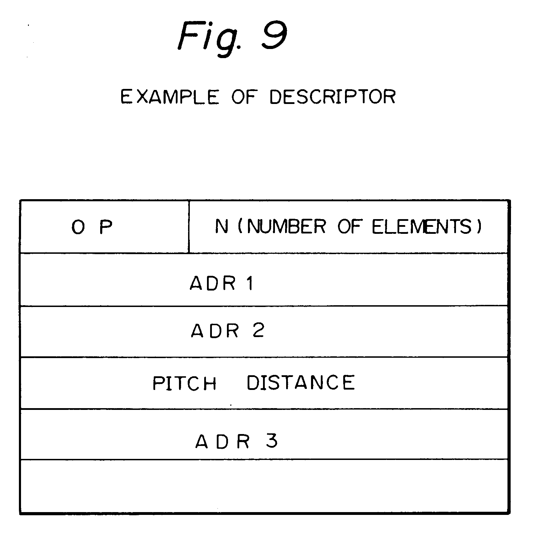

Another example of the instruction for data transfer and the descriptor is shown in Figs. 8 and 9. In Fig. 8, a data transfer instruction is shown. The instruction consists of an operation code and the addresses X, B, and D which designate the beginning addresses of the access descriptor which is preliminarily set in the main memory 1.

In Fig. 9, a descriptor related to the instruction of Fig. 8 is shown. The descriptor consists of OP, N(NUMBER OF ELEMENTS), ADR1, ADR2, PITCH DISTANCE, ADR3, and so on. OP is an operation code which represents the transferring direction, i.e., load or store, and the transfer mode. N(NUMBER OF ELEMENTS) represents the number of elements to be transferred. ADR1 represents the logical address of the beginning of the memory region of the main memory 1. ADR2 represents the logical address of the beginning of the memory region of the extension memory 5. ADR3 represents the address of the memory region of the list vector in the cases of the indirect designation load and the INDIRECT designation store. PITCH DISTANCE represents the constant interval of elements in the cases of distance load and distance store.

In the case of the operation using the instruction and the descriptor of Figs. 8 and 9, an access to the main memory 1, a reading of the access descriptor having the above-described content from the main memory 1, and the setting of the read description into the registers 4211 to 4215 are carried out by the address control portion 42 upon receipt of the second operand address of the data transfer instruction from the vector unit 31. Then a data transfer in the same manner as above-described is carried out.

According to the example shown in Figs. 8 and 9, an advantage is attained in that it is possible to add the functions concerning data transfer without changes of the transfer control unit 4 and the data transfer instruction shown in Fig. 8, by changing the content of the access descriptor, and, if necessary, by changing the constitution of the transfer control device 4 accordingly.

## Claims

1. A system for controlling a data transfer instruction in a computer apparatus having a processor unit (3), a main storage unit (1) for storing data to be processed by the processor unit, and an extension storage unit (5) for exchanging data with the main storage unit, characterised by means (42,) 4213,4211,4214) for holding a first beginning designating logical address for designating the beginning of a storage region of the extension storage unit, a second beginning designating logical address for designating the beginning of a storage region of the main storage unit, and a designation of a transfer mode, all of which are designated by a data transfer instruction to be executed by the processor unit; means (4231,4232) for summing distances corresponding to storage locations in said extension storage unit and said main storage unit, according to the designation of the transfer mode, and accordingly, generating a third logical address to be accessed for the extension storage unit from said first logical address of the extension storage unit and a fourth logical address to be accessed for the main storage unit from said second logical address of the main storage unit; means (41) for converting said third logical address to be accessed, to the beginning designating real address for the extension storage unit; and means (44) for converting said fourth logical address to the beginning designating real address for the main storage unit; wherein data transfer is executed between a storage region of the extension storage device designated by the beginning designating real address for the extension storage unit and a storage region of the main storage unit designated by the beginning designating real address for the main storage unit.

## Patentansprüche

1. System zum Steuern eines Datenübertragungsbefehls in einer Computer-Anlage mit einer Prozessoreinheit (3), einer Hauptspeichereinheit (1) zum Speichern der von der Prozessoreinheit zu verarbeitenden Daten und einer Erweiterungsspeichereinheit (5) zum Austauschen von Daten mit der Hauptspeichereinheit, gekennzeichnet durch Mittel (42, 4213, 4211, 4214) zum Halten einer ersten, einen Anfang benennenden logischen Adresse zur Benennung des Anfangs eines Speicherbereiches der Erweiterungsspeichereinheit, einer zweiten, einen Anfang benennenden logischen Adresse zur Benennung des Anfangs eines Speicherbereiches der Hauptspeichereinheit und einer Benennung eines Übertragungsmodus, von denen alle durch einen Datenübertragungsbefehl benannt werden, welcher von der Prozessoreinheit ausgeführt werden soll; Mittel (4231, 4232) für das Aufsummieren von Abständen, welche Speicherstellen in der Erweiterungsspeichereinheit und in der Hauptspeichereinheit entsprechen, gemäß der Benennung des Übertragungsmodus und so Erzeugen einer dritten logischen Adresse, auf die für die Erweiterungsspeichereinheit von der ersten logischen Adresse der Erweiterungsspeichereinheit zugegriffen werden soll, und einer vierten logischen Adresse, auf welche für die Hauptspeichereinheit von der zweiten logischen Adresse der Hauptspeichereinheit zugegriffen werden soll; Mittel (41) zum Umwandeln der dritten logischen Adresse, auf die zugegriffen werden soll, in die den Anfang benennende wirkliche Adresse für die Erweiterungsspeichereinheit; und Mittel (44) zum Umwandeln der vierten logischen Adresse in die den Anfang benennende wirkliche Adresse für die Hauptspeichereinheit; worin die Datenübertragung zwischen einem Speicherbereich des Erweiterungsspeichers, welcher durch die den Anfang benennende wirkliche Adresse für die Erweiterungsspeichereinheit benannt ist, und einem Speicherbereich der Hauptspeichereinheit, welcher durch die den Anfang benennende wirkliche Adresse für die Hauptspeichereinheit benannt ist, ausgeführt wird.

## Revendications

1. Un système destiné à commander une instruction de transfert de données dans un ordinateur comportant un processeur (3), une unité de mémoire centrale (1) qui est destinée à enregistrer des données à traiter par le processeur, et une unité de mémoire d'extension (5) qui est destinée à échanger des données avec l'unité de mémoire centrale, caractérisé par des moyens (42, 4213, 4211, 4214) qui sont destinés à conserver une première adresse logique de désignation de début, qui est destinée à désigner le début d'une région de mémoire de l'unité de mémoire d'extension, une seconde adresse logique de désignation de début qui est destinée à désigner le début d'une région de mémoire de l'unité de mémoire centrale, et une désignation d'un mode de transfert, qui sont toutes désignées par une instruction de transfert de données que doit exécuter le processeur; des moyens (4231, 4232) qui sont destinés à faire la somme de distances correspondant à des positions de mémoire dans l'unité de mémoire d'extension et dans l'unité de mémoire centrale, conformément à la désignation du mode de transfert, et à générer de façon correspondante une troisième adresse logique qui doit faire l'objet d'une opération d'accès dans l'unité de mémoire d'extension, à partir de la première adresse logique de l'unité de mémoire d'extension, et une quatrième adresse logique qui doit faire l'objet d'une opération d'accès dans l'unité de mémoire centrale, à partir de la seconde adresse logique de l'unité de mémoire centrale; des moyens (41) qui sont destinés à convertir la troisième adresse logique devant faire l'objet d'une opération d'accès, pour fournir l'adresse réelle de désignation de début pour l'unité de mémoire d'extension; et des moyens (44) qui sont destinés à convertir la quatrième adresse logique pour fournir l'adresse réelle de désignation de début pour l'unité de mémoire centrale; dans lequel un transfert de données est accompli entre une région de mémoire de l'unité de mémoire d'extension qui est désignée par l'adresse réelle de désignation de début pour l'unité de mémoire d'extension, et une région de mémoire de l'unité de mémoire centrale qui est désignée par l'adresse réelle de désignation de début pour l'unité de mémoire centrale.
